# EUROPÄISCHE PATENTSCHRIFT

(11) **EP 1 291 259 B1**
(45) Veröffentlichungstag und Bekanntmachung des Hinweises auf die Patenterteilung: **23.04.2008**
(21) Anmeldenummer: 02019716.6
(22) Anmeldetag: 03.09.2002
(51) Int. Cl.: B60T 13/66, B61H 13/00

(54) **Elektropneumatisches Bremssystem für Schienenfahrzeuge**
Electropneumatic brake system for trains
Système de freinage électro-hydraulique pour des trains

(30) Priorität: 10.09.2001 DE 10144301
(43) Veröffentlichungstag der Anmeldung: 12.03.2003
(73) Patentinhaber: KNORR-BREMSE Systeme für Schienenfahrzeuge GmbH, 80809 München (DE)
(72) Erfinder: Mayer, Reinhold, 85757 Karlsfeld (DE); Schelhaas, Christian, 81247 München (DE)
(74) Vertreter: Mattusch, Gundula

(56) Entgegenhaltungen:
- EP-A- 0 328 928
- DE-A1- 19 513 004
- DE-A1- 19 717 556
- DE-A1- 19 755 175

## Beschreibung

Die vorliegende Erfindung betrifft ein elektropneumatisches Bremssystem für Schienenfahrzeuge gemäß den Merkmalen des Patentanspruches 1.

Moderne Lokomotiven für den sog. "Vollbahnbereich" sind mit einem elektropneumatischen Bremssteuersystem ausgestattet, das sich funktional in zwei Bremssteuersysteme unterteilen lässt. Ein erstes Bremssteuersystem, die sog. "Zugbremssteuerung" ist für "normale" Betriebsbremsungen vorgesehen, bei denen die Lokomotive bzw. das Zugfahrzeug und ggf. daran angehängte Anhängerfahrzeuge gebremst werden. Ein zweites Bremssteuersystem, die sog. "Lokbremssteuerung" ist primär für den Rangierbetrieb, d.h. für langsame Fahrt vorgesehen. Die Lokbremssteuerung ist ausschließlich den Bremsen des Zugfahrzeuges zugeordnet, d.h. im Rangierbetrieb wird der Zug ausschließlich über die Bremsen der Lok gebremst.

Aus anmelderinternem Stand der Technik ist eine zweikanalige Zugbremssteuerung bekannt, mit einem ersten elektrischen Steuerkanal und einem redundanten zweiten pneumatischen Steuerkanal, der bei einem Ausfall des elektrischen Steuerkanals eine pneumatische Ansteuerung der Zugbremsen ermöglicht. Im Unterschied zur Zugbremssteuerung ist bei der Lokbremssteuerung nur ein einziger elektrischer Steuerkanal vorgesehen. Wenn es im Betrieb, insbesondere im Rangierbetrieb, zu einem Ausfall der elektrischen Lokbremssteuerung kommt, so wird bei einer Betätigung des der Lokbremssteuerung zugeordneten "Zusatzbremshebels" keine Bremswirkung aufgebaut.

EP 0 328 928 offenbart ein elektropneumatisches Bremsystem für Schienenfahrzeuge, das als Stand der Technik angesehen wird.

Aufgabe der Erfindung ist es, das oben genannte Bremssystem zu verbessern, insbesondere im Hinblick auf einen möglichen Ausfall der Lokbremssteuerung.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht darin, die Funktionsfähigkeit der Lokbremssteuerung zu überwachen und einen möglichen Ausfall der Lokbremssteuerung durch automatische Ansteuerung der Bremsen über die Zugbremssteuerung zu kompensieren.

Wenn der Fahrer den sog. "Zusatzbremshebel" betätigt, der zur Betätigung der Lokbremssteuerung vorgesehen ist, und aufgrund einer Störung die rein elektronische Lokbremssteuerung kein Bremssteuersignal erzeugt, so werden die Bremsen über die Zugbremssteuerung angesteuert. Hierzu ist die Zugbremssteuerung elektrisch, beispielsweise über einen Datenbus, mit dem Zusatzbremshebel bzw. dem "Zusatzbremsventil" der Lokbremssteuerung verbunden.

Durch die "automatische" Funktionsüberwachung der Lokbremssteuerung wird bei einem Ausfall der elektrischen Lokbremssteuerung praktisch ohne Zeitverlust die Zugbremssteuerung angesteuert. Wenn die Zugbremssteuerung ordnungsgemäß funktioniert, ist eine zuverlässige Abbremsung des Zuges sichergestellt wobei dann sogar alle vorhandenen Bremsen, d.h. auch die von ggf. vorhandenen Anhängern betätigt werden.

Bei herkömmlichen Systemen ist eine derartige automatische Überwachung nicht vorgesehen. Der Fahrer hat zwar auch hier die Möglichkeit, bei einem Ausfall der Lokbremssteuerung den Zug über das Führerbremsventil, d.h. über die Zugbremssteuerung zu bremsen. Jedoch vergeht hierbei zwangsläufig eine gewisse "Reaktionszeit", bis der Fahrer den Defekt in der Lokbremssteuerung erkennt und das Führerbremsventil betätigt, was im schlimmsten Fall zu einem Unfall führen kann.

Bei "Führerbremshebeln" bzw. "Führerbremsventilen" unterscheidet man "stellungsabhängige" und "zeitabhängige". Bei einem stellungsabhängigen Führerbremsventil berechnet die Zugbremssteuerung entsprechend der Stellung des Führerbremshebels ein Bremsanforderungssignal. Bei einem zeitabhängigen Führerbremsventil hingegen wird das Bremsanforderungssignal durch die Zugbremssteuerung in Abhängigkeit von der Zeitdauer der Betätigung des Führerbremshebels berechnet.

Das von der Zugbremssteuerung erzeugte Bremsanforderungssignal ist ein "Sollwert", der als elektrisches Signal an einen "Analogwandler" übertragen wird, der das elektrische Signal in einen Hauptluftleitungsdruckwert umsetzt. Dieser Hauptluftleitungsdruckwert wird von den Steuerventilen im gesamten Zug, d.h. im Zugfahrzeug und ggf. daran angehängten Anhängerfahrzeugen umgewandelt.

Die Steuerventile können entweder rein pneumatisch oder elektropneumatisch angesteuert sein. Für den Fall, dass die elektrische Ansteuerung der Steuerventile, d.h. die elektrische Steuerung des Druckes in der Hauptluftleitung ausgefallen ist, ist eine redundante pneumatische Steuerung des Hauptluftleitungsdruckes über einen in das Führerbremsventil integrierten pneumatisch arbeitenden "Druckregler" vorgesehen. Mit anderen Worten ist für die Zugbremssteuerung eine "pneumatische Rückfallebene" vorgesehen, die auch ohne elektrische Stromversorgung funktioniert und eine Ansteuerung der Zugbremsen ermöglicht. Eine in der elektropneumatischen Steuerung erkannte Störung kann somit durch Umschaltung auf die pneumatische Funktion kompensiert werden.

Im folgenden wird die Erfindung anhand eines Ausführungsbeispieles im Zusammenhang mit der Zeichnung näher erläutert.

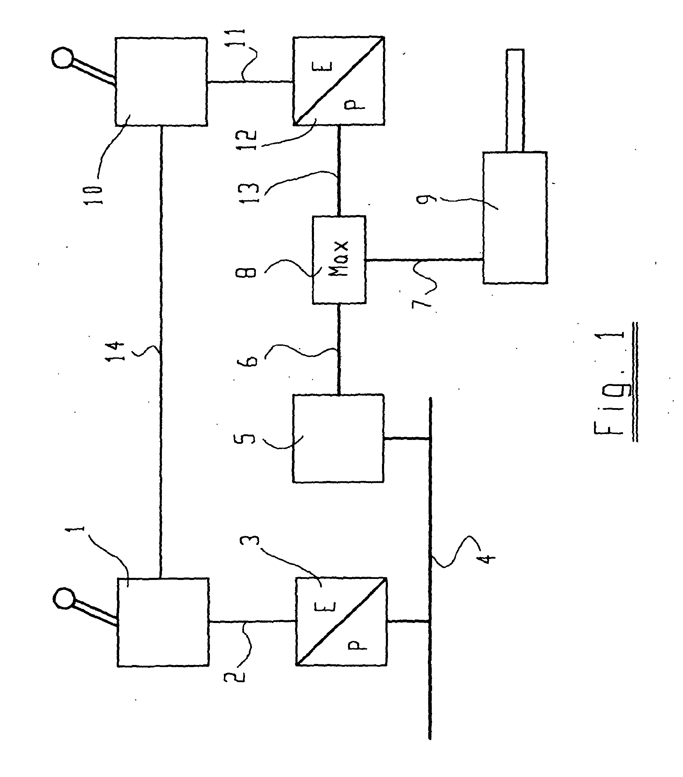

Die einzige Fig. 1 zeigt eine schematische Darstellung eines elektropneumatischen Bremssystems gemäß der Erfindung, wobei hier nur ein Ausschnitt der gesamten Bremsanlage im Bereich des Triebfahrzeugs dargestellt ist.

Fig. 1 zeigt ein Führerbremsventil 1, das über eine elektrische Leitung 2 mit einem "Analogwandler" 3 der Zugbremssteuerung verbunden ist. Der Analogwandler 3 wandelt ein elektrisches Ausgangssignal E des Führerbremsventils 1 in einen Druck P um.

Der Druckausgang des Analogwandlers 3 ist mit einer Hauptluftleitung 4 verbunden, die vom Triebfahrzeug durch den gesamten Zug verläuft. Von der Hauptluftleitung 4 zweigt im Triebfahrzeug ein pneumatisches Steuerventil 5 ab. Entsprechende Steuerventile sind auch in den Anhängerfahrzeugen (nicht dargestellt) vorgesehen. Das pneumatische Steuerventil 5 ist über pneumatische Druckleitungen 6, 7 sowie ein Maximaldruckauswahlventil 8 mit einem Bremszylinder 9 verbunden.

Ferner ist ein Zusatzbremsventil 10 vorgesehen, das über eine elektrische Leitung 11 mit einem Analogwandler 12 der Lokbremssteuerung verbunden ist. Der Analogwandler 12 wandelt ein elektrisches Ausgangssignal E des Zusatzbremsventils 10 in ein Bremsdrucksignal P um. Über eine pneumatische Leitung 13 ist der pneumatische Ausgang des Analogwandlers 12 mit dem Maximaldruckauswahlventil 8 verbunden. Das Maximaldruckauswahlventil 8 leitet den höheren der beiden an ihm anliegenden Drücke zum Bremszylinder 9 weiter.
Das elektropneumatische Bremssystem ist hier nur sehr schematisch dargestellt. Die "Zugbremssteuerung" ist hier schematisch durch das Führerbremsventil 1 sowie den Analogwandler 3 gebildet. Die "Lokbremssteuerung" ist hier durch das Zusatzbremsventil und den Analogwandler 12 gebildet. Die Zugbremssteuerung und die Lokbremssteuerung sind elektrisch miteinander verbunden, was hier durch eine das Führerbremsventil 1 und das Zusatzbremsventil 10 verbindende elektrische Leitung 14 angedeutet ist. In der Praxis kann das Zusatzbremsventil 10 über die elektrische Leitung 14 unmittelbar mit dem Analogwandler 3 verbunden sein.

Im folgenden wird die Funktionsweise näher erläutert. Die Erfindung betrifft primär einen Fehlerfall, bei dem die Lokbremssteuerung ausgefallen ist und die Zugbremssteuerung noch elektropneumatisch funktioniert. Wenn der Fahrer im Rangierbetrieb den Hebel des Zusatzbremsventils 10 betätigt, wird durch eine hier nicht dargestellte Überwachungseinrichtung überprüft, ob die Lokbremssteuerung ordnungsgemäß funktioniert und eine Bremskraft aufgebaut wird. Wird infolge einer Störung der Lokbremssteuerung am Triebfahrzeug keine Bremskraft aufgebaut, so wird dies der Zugbremssteuerung über die elektrische Leitung 14 "mitgeteilt". In diesem Fall übernimmt die Zugbremssteuerung die Bremsung. Vereinfacht ausgedrückt wird in einem Störungsfall der Lokbremssteuerung die Betätigung des Zusatzbremshebels als Betätigung eines zeitabhängigen Führerbremshebels interpretiert. Die Bremsanforderung des Fahrers wird dann also nicht elektrisch an den Analogwandler 12 der Lokbremssteuerung übertragen, sondern an den Analogwandler 3 der Zugbremssteuerung. Mit anderen Worten ausgedrückt, stellt die Zugbremssteuerung eine "elektronische Rückfallebene" für die Lokbremssteuerung dar.

Der Analogwandler 3 der Zugbremssteuerung setzt dieses "Notsignal" in einen Hauptluftleitungsdruck um. Der Hauptluftleitungsdruck wird dann durch das pneumatische Steuerventil 5 als Bremsanforderung interpretiert und in einen entsprechenden Bremsdruck im Bremszylinder 9 umgesetzt.

Bei ordnungsgemäßer Bremsanlage würde also bei einer Betätigung des Zusatzbremsventils der gesamte Zug nur über die Bremsen des Triebfahrzeugs gebremst. Bei einem Ausfall der Lokbremssteuerung übernimmt die Zugbremssteuerung, d.h. der Zug wird dann, sofern Anhänger angehängt sind, zusätzlich über die Anhängerbremsen gebremst.

Für bestimmte Betriebsarten, wie z.B. Güterzugbetrieb, kann zwar durch die Zugbremssteuerung nicht der Gradient für den Bremszylinderdruckaufbau erreicht werden, wie bei einer funktionierenden Lokbremssteuerung. Jedoch wird die Zeit zwischen der Erkennung einer Störung und der "Kompensation", d.h. dem Eingriff der Zugbremssteuerung bei der hier vorliegenden automatischen Überwachung gegenüber einer manuellen Überwachung reduziert.

## Patentansprüche

1. Elektropneumatisches Bremssystem für Schienenfahrzeuge, mit
- einem ersten vom Fahrer zu betätigenden Bedienorgan (1), das einer Zugbremssteuereinrichtung zur Ansteuerung von Zugbremsen im Normalbetrieb zugeordnet ist, und
- einem zweiten vom Fahrer zu betätigenden Bedienorgan (10), das einer Lokbremssteuereinrichtung zur separaten Ansteuerung von Triebfahrzeugbremsen zugeordnet ist, insbesondere für Bremsungen im Rangierbetrieb, wobei
- bei einem Ausfall der Lokbremssteuereinrichtung die Zugbremssteuereinrichtung durch Betätigen des zweiten Bedienorgans (10) ansteuerbar ist, indem das zweite Bedienorgan über einen Datenbus (14) mit einem elektrischen Steuereingang der Zugbremssteuereinrichtung verbunden ist.

2. Elektropneumatisches Bremssystem nach Anspruch 1, **dadurch gekennzeichnet,**
**dass** das erste Bedienorgan (1) ein Führerbremsventil ist, welches einen elektrischen Steuerkanal und einen redundanten pneumatischen Steuerkanal mit einem elektrischen Steuerausgang (2) bzw. einem pneumatischen Steuerausgang (3) aufweist.

3. Elektropneumatisches Bremssystem nach Anspruch 2, **dadurch gekennzeichnet,**
**dass** der elektrische Steuerausgang (2) mit einem elektropneumatischen Wandler (3) verbunden ist, zur Umwandlung des elektrischen Ausgangssignals des Führerbremsventils (1) in einen Hauptleitungsdruck, wobei der elektrische Kanal für Betriebsbremsungen mit ordnungsgemäß funktionierender Bremsanlage vorgesehen ist.

4. Elektropneumatisches Bremssystem nach Anspruch 2 oder 3, **dadurch gekennzeichnet,**
**dass** das zweite Bedienorgan (10) ein Zusatzbremsventil ist,

5. Elektropneumatisches Bremssystem nach Anspruch 4, **dadurch gekennzeichnet,**
**dass** das Zusatzbremsventil (10) über den Datenbus (14) mit dem elektropneumatischen Wandler (3) der Zugbremssteuerung verbunden ist.

6. Elektropneumatisches Bremssystem nach einem der Ansprüche 2 bis 5, **dadurch gekennzeichnet,**
**dass** bei einem Ausfall des elektrischen Kanals der Hauptleitungsdruck über den pneumatischen Kanal steuerbar ist.

## Claims

1. Electro-pneumatic brake system for rail vehicles, comprising
- a first control element (1) to be operated by the conductor, which is associated with a train brake control means for controlling train brakes in regular operation, and
- a second control element (10) to be operated by the conductor, which is associated with a locomotive brake control means for separate control of traction unit brakes, in particular for brake application cycles in marshalling operation, wherein
- in the case of failure of the locomotive brake control means, said train brake control means is controllable by actuation of said second control element (10) as said second control element is connected via a data bus (14) to an electrical control input of said train brake control means.

2. Electro-pneumatic brake system according to Claim 1, **characterised in**
**that** said first control element (1) is a driver's brake valve that comprises an electrical control channel and a redundant pneumatic control channel including an electrical control output (2) or a pneumatic control output (3), respectively.

3. Electro-pneumatic brake system according to Claim 2, **characterised in**
**that** said electrical control output (2) is connected to an electro-pneumatic converter (3) for conversion of the electrical output signal from said driver's brake valve (1) into a main brake pipe pressure, with said electrical channel being provided for service braking applications with a properly functioning brake system.

4. Electro-pneumatic brake system according to Claim 2 or 3, **characterised in**
**that** said second control element (10) is a straight air brake cock.

5. Electro-pneumatic brake system according to Claim 4, **characterised in**
**that** said straight air brake cock (10) is connected via said data bus (14) to said electro-pneumatic converter (3) of said train brake control system.

6. Electro-pneumatic brake system according to any of the Claims 2 to 5, **characterised in**
**that** in the event of failure of said electrical channel, said main brake pipe pressure is controllable via said pneumatic channel.

## Revendications

1. Système de freinage électropneumatique pour véhicules sur rails, comprenant
- un premier organe de commande (1) à la commande par le conducteur de locomotive, qui est affecté à un moyen de commande de frein du train à commander des freins du train en opération régulière, et
- un deuxième organe de commande (10) à la commande par le conducteur de locomotive, qui est affecté à un moyen de commande de frein de la machine pour la commande séparée de freins de l'engin moteur, en particulier pour des cycles de serrage de frein en circulation en régime de manoeuvre, dans lequel
- au cas de défaillance du moyen de commande de frein de la machine, ledit moyen de commande de frein du train est commandable par la commande dudit deuxième organe de commande (10) parce que ledit deuxième organe de commande est relié, via un bus de données (14), à une entrée de commande électrique dudit moyen de commande de frein du train.

2. Système de freinage électropneumatique selon la revendication 1, **caractérisé en ce**
**que** ledit premier organe de commande (1) est un robinet de mécanicien, qui comprend un conduit de commande électrique et un conduit redondant de commande pneumatique, renfermant une sortie de commande électrique (2) ou respectivement une sortie de commande pneumatique (3).

3. Système de freinage électropneumatique selon la revendication 2, **caractérisé en ce**
**que** ladite sortie de commande électrique (2) est reliée à un convertisseur électropneumatique (3) pour la conversion du signal de sortie électrique provenant dudit robinet de mécanicien (1) en une pression de la conduite générale de frein, audit conduit électrique étant prévu pour des opérations de serrage de service à un système de serrage de frein bien fonctionnant.

4. Système de freinage électropneumatique selon la revendication 2 ou 3, **caractérisé en ce**
**que** ledit deuxième organe de commande (10) est un robinet du frein direct.

5. Système de freinage électropneumatique selon la revendication 4, **caractérisé en ce**
**que** ledit robinet du frein direct (10) est raccordé via ledit bus de données (14) audit convertisseur électropneumatique (3) dudit système de commande de freinage du train.

6. Système de freinage électropneumatique selon une quelconque des revendications 2 à 5, **caractérisé en ce**
**qu'**au cas de défaillance dudit conduit électrique, ladite pression de la conduite générale de frein est commandable via ledit conduit pneumatique.
